# FASCICULE DE BREVET EUROPEEN

(11) **EP 0 562 922 B1**
(45) Date de publication et mention de la délivrance du brevet: **21.05.1997**
(21) Numéro de dépôt: 93400705.5
(22) Date de dépôt: 19.03.1993
(51) Int. Cl.: C09D 183/06, C08K 5/00, C07F 5/02

(54) **Compositions à base de polyorganosiloxanes à groupements fonctionnels réticulables et leur utilisation pour la réalisation de revêtements antiadhésifs**
Vernetzbare, funktionelle Gruppen enthaltende Polysiloxanzusammensetzungen und deren Anwendung als Wirkstoff für nichthaftende Beschichtungen
Cross-linkable, functional groups containing polysiloxanes and their use for making anti-adhesive coatings

(30) Priorité: 23.03.1992 FR 9203441
(43) Date de publication de la demande: 29.09.1993
(73) Titulaire: RHONE-POULENC CHIMIE, 92408 Courbevoie Cédex (FR)
(72) Inventeur: Cavezzan, Jacques, F-69100 Villeurbanne (FR); Priou, Christian, F-69100 Villeurbanne (FR)
(74) Mandataire: Trolliet, Maurice

(56) Documents cités:
- EP-A- 0 353 030
- EP-A- 0 442 635
- EP-A- 0 464 706
- DE-A- 2 025 469
- CHEMICAL ABSTRACTS, vol. 91, no. 14, 1979, Columbus, Ohio, US; abstract no. 108692v, KITAMURA MASAHIRO 'epoxy resin compositions' page 34 ; & JP-A-7 950 596

## Description

La présente invention a pour objet les compositions à base de polyorganosiloxanes à groupements fonctionnels réticulables par voie cationique, leur utilisation pour la réalisation de revêtements antiadhésifs et les articles constitués d'un support solide dont une surface au moins est rendue antiadhésive par revêtement à l'aide desdits polyorganosiloxanes fonctionnels réticulés par activation photochimique ou sous faisceau d'électrons.

Il est connu de mettre en oeuvre pour la réalisation de revêtements anti-adhésifs, des compositions à base d'un polyorganosiloxane à groupements fonctionnels (par exemple du type époxy, vinyl éther) auquel est additionné un sel d'onium amorceur cationique pour la réticulation (brevets US-A-4.450.360 ; US-A-4.576.999 ; US-A-4.640.967).

Il a été constaté que les meilleurs résultats sont obtenus avec des sels d'onium dont l'anion est SbF₆⁻ ; des amorceurs contenant ce type d'anion présentent toutefois des risques de toxicité.

La demanderesse a trouvé de nouvelles compositions à base de polyorganosiloxanes à groupements fonctionnels dans lesquelles le sel d'onium amorceur cationique présent contient un anion de nucléophilie voisine de celle de SbF₆⁻ mais sans avoir les inconvénients liés à ce dernier.

Les compositions de l'invention sont à base d'un polyorganosiloxane réticulable par voie cationique et d'une quantité catalytique efficace d'un borate d'onium d'un élément des groupes 15 à 17 de la classification périodique (Chem.&Eng.News, vol 63, N.5, 26 du 4 Février 1985) ; elles sont caractérisées en ce que l'entité cationique dudit borate d'onium est choisie parmi:
1) - les sels d'onium de formule I

   [(R₁)ₙ- A -(R₂)ₘ]⁺ (I)

   formule dans laquelle :
   . A représente un élément des groupes 15 à 17 tel que par exemple I, S, Se, P, N,
   . R¹ représente un radical aryle carbocyclique ou hétérocyclique en C₆-C₂₀, ledit radical hétérocyclique pouvant contenir comme hétéroéléments par exemple de l'azote, du soufre,
   . R² représente R¹ ou un radical alkyle ou alkényle linéaire ou ramifié en C₁-C₃₀ ; lesdits radicaux R¹et R² étant éventuellement substitués par exemple par un groupement alcoxy en C₁-C₂₅, alkyle en C₁-C₂₅, nitro, chloro, bromo, cyano, carboxy, mercapto,
   . n est un nombre entier allant de 1 à v+1, v étant la valence de l'élement A
   . m est un nombre entier allant de 0 à v-1 avec n+m = v+1
2) - les sels d'oxoisothiochromanium décrits dans la demande de brevet WO-A-90/11303 ayant la formule : 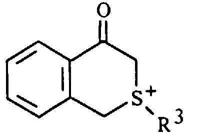 dans laquelle R³ représente un radical alkyle ou cycloalkyle en C₁ - C₂₀ ou un radical aryle, notamment le sel de sulfonium du 2-éthyl-4-oxoisothiochromanium ou de 2-dodecyl- 4-oxoisothiochromanium.
   et en ce que l'entité anionique borate a pour formule :

   [B Xₐ R_{b}]⁻

   formule dans laquelle :
   - a et b sont des nombres entiers allant de 0 à 4 avec a + b = 4
   - les symboles X représentent
      . un atome d'halogène (chlore, fluor) avec a = 0 à 3
      . une fonction OH avec a = 0 à 2
   - les symboles R sont identiques ou différents et représentent
      . un radical phényle substitué par au moins un groupement électroattracteur tel que par exemple CF₃, NO₂, CN, ou par au moins 2 atomes d'halogène (fluor tout particulièrement)
      . un radical aryle contenant au moins deux noyaux aromatiques tel que par exemple biphényle, naphtyle, éventuellement substitué par au moins un élément ou un groupement electroattracteur, notamment atome d'halogène (fluor tout particulièrement), CF₃, NO₂, CN.

Comme exemple d'anion borate on peut citer :

| | | |
|---|---|---|
| [B (C₆F₅)₄]⁻ | [B(C₆H₄CF₃)₄]⁻ | |
| [(C₆F₅)₂ B F₂]⁻ | [C₆F₅ B F₃]⁻ | [B (C₆H₃F₂)₄]⁻ |

Les sels d'onium de formule I sont décrits dans de nombreux documents notamment dans les brevets US-A-4.026.705 ; US-A-4.032.673 ; US-A-4.069.056 ; US-A-4.136,102 ; US-A-4.173.476.

On peut citer tout particulièrement les cations suivants :

| | |
|---|---|
| [(φ)₂I]⁺ | [C₈H₁₇-O-φ-I-φ]⁺ |
| [C₁₂H₂₅-φ-I-φ]⁺ | [(C₈H₁₇-O-φ)₂I]⁺ |
| [(φ)₃ S]⁺ | [(φ)₂-S-φ-O-C₈H₁₇]⁺ |
| [φ-S-φ-S-(φ)₂]⁺ | [(C₁₂H₂₅-φ)₂I]⁺ |

Comme exemple de borate d'onium, on peut citer :

| | |
|---|---|
| [(φ)₂ I]⁺, [B (C₆F₅)₄]⁻ | |
| [C₁₂H₂₅-φ-I-φ]⁺, [B(C₆F₅)₄]⁻ | [(C₈H₁₇-O-φ)₂ I]⁺, [B(C₆F₅)₄]⁻ |
| [(C₈H₁₇-O-φ-I-φ)]⁺, [B(C₆F₅)₄]⁻ | [(φ)₃ S]⁺, [B (C₆F₅)₄]⁻ |
| [(φ)₂S-φ-O-C₈H₁₇]⁺, [B(C₆H₄CF₃)₄]⁻ | [(C₁₂H₂₅-φ)₂I]⁺, [B(C₆F₅)₄]⁻ |

Les borates d'onium faisant l'objet de la présente invention peuvent être préparés par réaction d'échange entre un sel de l'entité cationique, halogénure notamment (chlorure, iodure) avec un sel de métal alcalin (sodium, lithium, potassium) de l'entité anionique.

Les conditions opératoires (notamment quantités respectives de réactifs, choix des solvants, durée, température, agitation) sont à la portée de l'homme de l'art ; celles-ci doivent permettre de récupérer le sel amorceur recherché sous forme solide par filtration du précipité formé, ou sous forme huileuse par extraction par un solvant approprié.

Les sels de métal alcalin de l'entité anionique peuvent être préparés de manière connue, par réaction d'échange entre un composé halogénoboré et un composé organométallique (par exemple magnésien, lithien, stannique) portant les groupements hydrocarbonés désirés, en quantité stoechiométrique, suivie éventuellement d'une hydrolyse à l'aide d'une solution aqueuse d'halogénure de métal alcalin ; ce type de synthèse est par exemple décrit dans "J. of organometallic Chemistry" vol 178, p.1-4, 1979 ; "J.A.C.S" 82, 1960, 5298 ; "Anal.Chem,Acta" 44, 1969, 175-183 ; brevets US-A-4.139.681 et DE-A-2.901.367 ; "Zh. Org. Khim." Vol.25, N°5 - pages 1099-1102 Mai 1989.

Les polyorganosiloxanes réticulables par voie cationique entrant dans la composition de l'invention présentent des groupements fonctionnels par exemple de type époxy, vinyléther.

Lesdits polyorganosiloxanes sont linéaires ou sensiblement linéaires et constitués de motifs de formule (Il) et terminés par des motifs de formule (III) ou cycliques constitués de motifs de formule (Il) 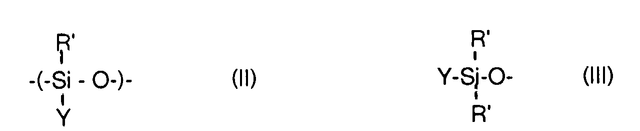 formules dans lesquelles
. les symboles R' sont semblables ou différents et représentent notamment un radical alkyle linéaire ou ramifié en C₁ - C₆, éventuellement substitué (3,3,3-trifluoropropyl par exemple), cycloalkyl en C₅ - C₈, aryle (phényle notamment), aryle substitué (dichlorophényle par exemple), au moins 60 % molaire des radicaux R' étant des radicaux méthyles ;
. les symboles Y sont semblables ou différents et représentent soit le groupement R' soit un radical organique fonctionnel réticulable par voie cationique tel que par exemple les groupements époxyfonctionnels, vinyloxyfonctionnels, lesdits fonctions par exemple époxyde, vinyléther étant reliées à un atome de la chaîne silicone par l'intermédiaire d'un radical divalent contenant de 2 à 20 atomes de carbone ;
l'un au moins des symboles Y représentant un radical organique fonctionnel réticulable par voie cationique, et de préférence de 1 à 10 radicaux organiques fonctionnels par mole de polymère.

Les polyorganosiloxanes époxy ou vinyloxyfonctionnels sont décrits notamment dans les brevets DE-A-4.009.889 ; EP-A-396.130 ; EP-A-355.381 ; EP-A-105.341 ; FR-A-2.110.115 ; FR-A-2.526.800.

Les polyorganosiloxanes époxy fonctionnels peuvent être préparés par réaction d'hydrosilylation entre des huiles à motifs Si-H et des composés époxyfonctionnels tels que par exemple vinyl-4 cyclohexèneoxyde, allylglycidyléther.

Les polyorganosiloxanes vinyloxyfonctionnels peuvent être préparés par réaction d'hydrosilylation entre des huiles à motifs Si-H et des composés vinyloxyfonctionnels tels que par exemple l'allylvinyléther, l'allyl-vinyloxyéthoxybenzène.

Les polyorganosiloxanes époxy ou vinyloxyfonctionnels se présentent généralement sous forme de fluides présentant une viscosité à 25°C de 10 à 10.000 mm²/s et de préférence de 100 à 600 mm²/s.

Par quantité catalytique efficace de borate d'onium, on entend selon l'invention, la quantité suffisante pour amorcer la réticulation ; cette quantité est généralement comprise entre 0,01 et 20 parties en poids, le plus souvent entre 0,1 et 8 parties en poids pour réticuler par voie photochimique 100 parties en poids de polyorganosiloxane réticulable.

Les compositions selon l'invention peuvent comporter en outre d'autres ingrédients tels que par exemple des modulateurs d'adhérence (résines ou polymères linéaires silicones portant par exemple des fonctions vilnyle, époxy, vinyléther, alcool), des pigments, des photosensibilisateurs, des agents fongicides, bactéricides et anti-microbiens, des inhibiteurs de corrosion.

Les compositions selon l'invention sont utilisables telles quelles ou en solution dans un solvant organique. Elles sont utiles dans le domaine des revêtements anti-adhérents sur les matériaux cellulosiques, les films, les peintures, l'encapsulation de composants électriques et électroniques, les revêtements pour textiles, ainsi que pour le gainage de fibres optiques.

Elles sont tout particulièrement intéressantes lorsqu'elles sont utilisées telles quelles pour rendre non adhérent un matériau , tel que des feuilles métalliques, du verre, des matières plastiques ou du papier, à d'autres matériaux auquels il adhérerait normalement. La composition présente avantageusement une viscosité ne dépassant pas 5 000 mPa.s, de préférence ne dépassant pas 4 000 mPa.s à 25°C.

L'invention vise donc également un procédé permettant de rendre des articles (feuilles par exemple) non adhérents à des surfaces auxquelles ils adhèrent normalement, procédé caractérisé en ce qu'il consiste à appliquer une quantité de composition de l'invention, comprise généralement entre 0,1 et 5 g par m² de surface à enduire et à réticuler la composition par apport d'énergie dont au moins une partie, de préférence la totalité, est fournie par un rayonnement U.V.

Le rayonnement U.V. utilisé présente une longueur d'onde comprise entre 200 et 400 nanomètres, de préférence compris entre 254 et 360 nanomètres.

La durée d'irradiation peut être courte et elle est généralement inférieure à 1 seconde et est de l'ordre de quelques centièmes de seconde pour les très faibles épaisseurs de revêtements. La réticulation effectuée est excellente même en l'absence de tout chauffage. Bien entendu un chauffage entre 25 et 100°C n'est pas exclu de l'invention.

Bien entendu, on peut régler le temps de durcissement notamment, par le nombre de lampes U.V. utilisées, par la durée d'exposition aux U.V. et par la distance entre la composition et la lampe U.V.

Les compositions sans solvant, c'est-à-dire non diluées, sont appliquées à l'aide de dispositifs aptes à déposer, d'une façon uniforme, de faibles quantités de liquides. On peut utiliser à cet effet par exemple le dispositif nommé "Helio glissant" comportant en particulier deux cylindres superposés ; le rôle du cylindre placé le plus bas, plongeant dans le bac d'enduction où se trouve la composition, est d'imprégner en une couche très mince le cylindre placé le plus haut, le rôle de ce dernier est alors de déposer sur la papier les quantités désirées de composition dont il est imprégné, un tel dosage est obtenu par règlage de la vitesse respective des deux cylindres qui tournent en sens inverse l'un de l'autre.

Les quantités de compositions déposées sur les supports sont variables et s'échelonnent le plus souvent entre 0,1 et 5 g/m² de surface traitée. Ces quantités dépendent de la nature des supports et des propriétés antiadhérentes recherchées. Elles sont plus souvent comprises entre 0,5 et 3 g/m² pour des supports non poreux.

La présente invention a également pour objet les articles (feuilles par exemple) constitués d'un matériau solide (par exemple métal, verre, matière plastique, papier) dont une surface au moins est revêtue de la composition ci-dessus décrite photoréticulée ou réticulée sous faisceau d'electrons.

Les exemples suivants sont donnés à titre illustratif et ne peuvent être considérés comme une limite du domaine et de l'esprit de l'invention.

### Exemple 1 : tetrakis(pentafluorophényl)borate de diphényliodonium

**[(Φ)**_{**2**} **I]**^{**+**} **, [B(C**_{**6**}**F**_{**5**}**)**_{**4**}**]**^{**-**}

### - Préparation de tetrakis(pentafluorophényl)borate de lithium

On utilise un ballon tétracol de 4000 ml, équipé d'une agitation mécanique, d'un réfrigérant à eau, d'un thermomètre et d'une ampoule de coulée. Le montage est préalablement séché sous atmosphère d'argon.
On charge 1600 ml de pentane anhydre et 126,8 g (soit 0,513 mole) de bromopentafluorobenzène. L'ensemble est agité puis refroidi à -75°C à l'aide d'un bain glace carbonique / acétone.
313 ml d'une solution 1,6M de n-Butyllithium dans l'hexane est chargée dans l'ampoule de coulée puis est ajoutée goutte à goutte en 50 minutes.
Le mélange est ensuite laissé sous agitation pendant 5 heures à la température de -78°C.
125 ml d'une solution 1M de trichlorure de bore dans l'hexane sont chargés dans l'ampoule de coulée, et ajoutés au milieu en trente minutes. On retire le bain réfrigérant, et on laisse revenir le mélange réactionnel à la température ambiante. On laisse ensuite sous agitation pendant 12 heures. Le mélange réactionnel est hydrolysé par addition lente de 625 ml d'eau. Les deux phases sont séparées, et la phase organique est lavée par deux fractions de 125 ml d'eau. Les phases aqueuses sont réunies, puis sont extraites trois fois à l'éther (3 x 125 ml). Les phases éthérées sont rassemblées et séchées sur du sulfate de magnésium. L'éther est évaporé sous préssion réduite, et on récupère 101 g, (soit un rendement de 99 %) de tétrakis (pentafluorophényl)borate de lithium .

### - Préparation du tetrakis(pentafluorophényl)borate de diphényliodonium

Dans un erlenmeyer de 1000 ml, on dissout 7,17 g. (soit 22,6 mmoles) de chlorure de diphényliodonium dans 300 ml d'eau. On ajoute goutte à goutte 15,52 g (soit 22,6 mmoles) de tétrakis(pentafluorophényl) borate de lithium en solution dans 250 ml d'eau. Le mélange est laissé sous agitation pendant 30 minutes, puis est filtré. Le filtrat est séché sous pression réduite (133 Pa) pendant une nuit, à l'abri de la lumière. On récupère ainsi 16,33 g (soit un rendement de 75 %).de tétrakis(pentafluorophényl)borate de diphényliodonium.

### Exemple 2 : tetrakis (pentafluorophényl)borate de (4-octyloxyphényl) phényliodonium

**[(C**_{**8**}**H**_{**17**}**)-O-Φ- I -Φ)]**^{**+**}**, [B (C**_{**6**}**F**_{**5**}**)**_{**4**}**]**^{**-**}

### - Préparation de l'octylphényléther

Dans un ballon de tricol de 500 ml, équipé d'une agitation mécanique, d'un thermomètre et d'un réfrigérant à eau, on charge 44,8 g (soit 0,477 mole) de phénol, 38,6 g (soit 0,2 mole) de n-bromooctane, 6 g de bromure de tétrabutylammonium, 26,8 g de potasse, 100 ml d'eau et 100 ml de toluène. L'ensemble est agité, puis est porté au reflux pendant 20 heures. Le mélange réactionnel est ensuite refroidi à température ambiante. Les phases sont décantées et séparées. La phase organique est lavée par 100 ml d'une solution 0,5 N de soude, puis par cinq fractions de 100 ml d'eau. Elle est ensuite séchée sur sulfate de magnésium, puis le solvant est chassé sous pression réduite, à la température de 85 ° C.
On récupère 41,5 g (soit un rendement de 95%) de n-octylphényléther, qui peut être utilisé par la suite sans purification supplémentaire.

### - Préparation de l'hydroxytosyloxyiodobenzène

Dans un ballon de 1 000 ml, équipé d'une agitation mécanique, d'un réfrigérant à eau et d'une ampoule de coulée, on charge 80,53 g (soit 0,25 mole) de iodobenzènediacétate, 300 ml d'eau et 100 ml d'acide acétique. L'ensemble est agité, et est chauffé à 40°C. On ajoute ensuite en cinq minutes 47,55 g (soit 0,25 mole) d'acide paratoluène sulfonique monohydrate par l'intermédiaire de l'ampoule de coulée. Le mélange réactionnel est maintenu à 40°C pendant deux heures, puis est refroidi à 25°C. Un précipité blanc apparait. Il est récupéré par filtration, puis est séché sous pression réduite.
On obtient 68,15 g (soit un rendement de 70 %) du produit recherché.

### - Préparation du tosylate de (4-octyloxyphenyl) phényliodonium

Dans un erlenmeyer de 250 ml muni d'un barreau d'agitation magnétique, on charge 22,2 g (soit 0,057 mole) d'hydroxytosyloxyiodobenzène, 9 g (soit 0,04 mole) de n-octyphényl éther, 5 ml d'acétonitrile et 1,5 ml d'acide acétique . Ce mélange est agité et est porté à la température de 40°C pendant 2 heures et 30 minutes. On ajoute ensuite 1,5 ml d'acide acétique glacial, puis on laisse 5 heures à 40 °C. On laisse refroidir la masse réactionnelle, et on ajoute 150 ml d'eau tout en maintenant une agitation vigoureuse. Ce mélange est ensuite agité pendant 12 heures à température ambiante, puis est décanté. La phase organique est lavée plusieurs fois par de l'eau, jusqu'à ce qu'un précipité jaune apparaisse. Ce solide est récupéré par filtration, il est lavé par 50 ml d'éther, puis est séché sous vide à la température de 45°C.
On récupère ainsi 19,5 g,(soit un rendement de 76 %).de tosylate de (4-octyloxyphényl) phényl iodonium.

### -Préparation du tetrakis (pentafluorophényl)borate de (4-octyloxyphényl) phényliodonium

Dans un erlenmeyer de 500 ml muni d'un barreau d'agitation magnétique, on dissout 5 g (soit 0,0086 mole) de tosylate de (4-octyloxyphényl) phényl iodonium dans 350 ml d'acétone. A l'abri de la lumière, on ajoute 3,4 g (soit 0,0103 mole) de tétrakis(pentafluorophényl)borate de lithium en solution dans 50ml d'acétone . Le mélange est agité pendant 48 heures, puis est filtré pour éliminer le p-toluène sulfonate de lithium formé. L'acétone est évaporée sous pression réduite, et on récupère 7,98 g (soit un rendement de 92 %) de tétrakis(pentafluorophényl)borate de (4-octyloxyphényl) phényl iodonium .

### Exemple 3 : tetrakis (pentafluorophényl)borate de bisdodécylphényliodonium

**[(C**_{**12**}**H**_{**25**}**-Φ)**_{**2**} **I]**^{**+**}**, [B(C**_{**6**}**F**_{**5**}**)**_{**4**}**]**^{**-**}

### - Préparation du chlorure de bisdodécylphényliodonium

Dans un ballon de 1 000 ml, équipé d'une agitation mécanique, d'un réfrigérant à eau et d'une ampoule coulée, on charge 100 g (soit 0,405 mole) de dodécylbenzène , 43,5 g (soit 0,203 mole) de iodate de potassium, 199,6 g d'acide acétique et 59,5 g d'anhydride acétique . Le mélange est agité puis refroidi dans un bain de glace à 0°C. On charge un mélange de 59,8 g d'acide sulfurique et de 39,86 g d'acide acétique dans l'ampoule de coulée. On ajoute en 25 minutes ce mélange à la masse réactionnelle. On laisse 18 heures sous agitation à température ambiante. On ajoute ensuite 750 ml d'eau, puis on extrait la masse réactionnelle par trois fractions d'éther (3x350 ml). Les phases éthérées sont rassemblées puis évaporées sous pression réduite. Le concentrat est repris par 540 ml d'une solution saturée en chlorure de sodium , puis le mélange est refroidi dans un bain de glace pendant deux heures. On récupère le produit par filtration sur verre fritté n°4. Le solide est ensuite recristallisé deux fois dans l'acétone. On récupère 69,18 g (soit un rendement de 52 %) de chlorure de bisdodécylphényliodonium par filtration.

### - Préparation du tetrakis (pentafluorophényl)borate de bisdodécylphényliodonium

Dans un erlenmeyer de 1000 ml, on dissout 3,76 g de chlorure de bisdodécylphényliodonium dans 500 ml d'acétone . On ajoute ensuite goutte à goutte une solution de 5 g de tétrakis(pentafluorophényl)borate de lithium dans 100 ml d'acétone . Le mélange est laissé sous agitation pendant deux jours, à l'abri de la lumière, puis le chlorure de lithium formé est éliminé par filtration. On récupère 8 g (soit un rendement de 90 %) de tétrakis(pentafluorophényl)borate de bisdodécylphényliodonium après évaporation de l'acétone.

### Exemples 4 - 10 :

Le mode opératoire général suivi est le suivant :
- à 100 parties en poids d'un polymère A constitué d'un organopolysiloxane à terminaisons triméthylsilyle et à fonctions époxyde,
- on ajoute 0,5 partie en poids de photoamorceur mis en solution à 2 % en poids dans un solvant (méthanol ou éthyl-2 hexanediol).

Après agitation manuelle pendant 30 minutes, le mélange est déposé (environ 0,5 à 3 g/m²) sur un film TERPHANE ® 6868 (commercialisé par RHONE-POULENC) de 45 µm. d'épaisseur.
Le film enduit passe sous une lampe U.V. de technologie FUSION SYSTEM® F 450 (commercialisée par la société FUSION) et caractérisée par :
- une longueur d'onde de 360 nm,
- une absence d'électrodes,
- une excitation par micro-ondes,
- une puissance de 120 W par cm irradié,

Après un passage sous la lampe à la vitesse de 32 m/mn, l'énergie d'irradiation est de 0,025 J/cm² (mesurée avec une cellule UVICURE® de la société EIT-USA) ; on note la vitesse de défilement en m/mn nécessaire au durcissement de la couche silicone.

La qualité du revêtement obtenue après durcissement est évaluée par mesure des propriétés antiadhérentes de la couche silicone après avoir été mise en contact :
- pendant 20 heures à 20°C avec un adhésif caoutchouc (TESA 4154 et TESA 4651) suivant le test FINAT n°3.
- pendant 20 heures à 70°C avec un adhésif acrylique (TESA 4970) suivant le test FINAT n°10.

D'autre part l'adhésion subséquente (SA) traduit le niveau de polymérisation de la couche silicone. La mesure est effectuée suivant le test FINAT n° 11.
Les résultats obtenus en mettant en oeuvre :
- aux exemples 4 et 5 (comparatifs) :
* un polyorganosiloxane A₁ de formule M D^{E}₄ D₄₀ M où
   M = (CH₃)₃SiO_{1/2}, D^{E} = (4-cyclohexèneoxyde)(CH₃)SiO_{2/2} et D = (CH₃)₂SiO_{2/2} renfermant 104 meq/100 g de fonctions époxyde et ayant une viscosité de 600 mm²/s à 25 ° C.
* et un photoamorceur B₁ constitué d'hexafluoroantimonate de bis(dodécyl phényl)iodonium en solution dans l'éthyl-2 hexanediol.

- aux exemples 6 à 8 :
* le polyorganosiloxane A₁
* et un photoammorceur B₂ constitué de tetrakis (pentafluorophényl)borate de diphényl iodonium en solution dans du méthanol.

- aux exemples 9 et 10:
* un polyorganosiloxane A₂ de formule M D^{E}₄ D₃₀ M où
   M, D^{E} et D ont la même définition que ci-dessus renfermant 128 meq/100 g de fonctions époxyde et ayant une viscosité de 500 mm²/s à 25°C.
* et le photoamorceur B₂
figurent au tableau I.

**TABLEAU 1**

| **ex** | **Vitesse** | **Quantité déposée** | **anti-adhérence (g/cm)** | | | **SA** |
|---|---|---|---|---|---|---|
| | **(m/mn)** | **(g/m**^{**2**}**)** | **TESA 4154 20h à 20°C** | **TESA 4651 20h à 20°C** | **TESA 4970 20h à 70°C** | **(%)** |
| **4** | 100 | 1,0 | 1,4 | 6,0 | 65 | 78 |
| **5** | 130 | 1,2 | 1,5 | 6,9 | 43 | 75 |
| **6** | 100 | 1,1 | 1,6 | 9,2 | 17 | 86 |
| **7** | 130 | 0,9 | 1,8 | 10 | 22 | 80 |
| **8** | 150 | 0,7 | 1,7 | 9,7 | 37 | 95 |
| **9** | 100 | 1,2 | 30 | 56 | 55 | 86 |
| **10** | 190 | 1,0 | 16 | 45 | 76 | 96 |

## Revendications

1. Compositions à base d'un polyorganosiloxane réticulable par voie cationique et d'une quantité catalytique efficace d'un borate d'onium d'un élément des groupes 15 à 17 de la classification périodique (Chem.& Eng.News, vol 63, N.5, 26 du 4 Février 1985), compositions caractérisées en ce que l'entité cationique dudit borate d'onium est choisie parmi:
1) - les sels d'onium de formule I
[(R₁)ₙ- A -(R₂)ₘ]⁺ (I)
formule dans laquelle :
. A représente un élément des groupes 15 à 17 tel que par exemple I, S, Se, P, N,
. R¹ représente un radical aryle carbocyclique ou hétérocyclique en C₆-C₂₀, ledit radical hétérocyclique pouvant contenir comme hétéroéléments par exemple de l'azote, du soufre,
. R² représente R¹ ou un radical alkyle ou alkényle linéaire ou ramifié en C₁-C₃₀ ; lesdits radicaux R¹et R² étant éventuellement substitués par exemple par un groupement alcoxy en C₁-C₂₅, alkyle en C₁-C₂₅, nitro, chloro, bromo, cyano, carboxy, mercapto,
. est un nombre entier allant de 1 à v+1, v étant la valence de l'élément A
. m est un nombre entier allant de 0 à v-1 avec n+m = v+1
2) - les sels d'oxoisothiochromanium ayant la formule : 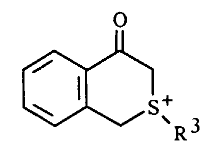 dans laquelle R³ représente un radical alkyle ou cycloalkyle en C₁ - C₂₀ ou un radical aryle, , notamment le sel de sulfonium du 2-éthyl-4-oxoisothiochromanium ou de 2 -dodécyl- 4-oxoisothiochromanium,
et en ce que l'entité anionique borate a pour formule :
[B Xₐ R_{b}]⁻
formule dans laquelle :
- a et b sont des nombres entiers allant de 0 à 4 avec a + b = 4
- les symboles X représentent
. un atome d'halogène (chlore, fluor) avec a = 0 à 3
. une fonction OH avec a = 0 à 2
- les symboles R sont identiques ou différents et représentent
. un radical phényle substitué par au moins un groupement électroattracteur tel que par exemple CF₃, NO₂, CN, ou par au moins 2 atomes d'halogène (fluor tout particulièrement),
. un radical aryle contenant au moins deux noyaux aromatiques tel que par exemple biphényle, naphtyle, éventuellement substitué par au moins un élément ou un groupement électroattracteur, notamment atome d'halogène (fluor tout particulièrement), CF₃, NO₂, CN.

2. Compositions selon la revendication 1 caractérisées en ce que l'entité anionique borate est :
| | | |
|---|---|---|
| [B (C₆F₅)₄]⁻ | [B (C₆H₄CF₃)₄]⁻ | |
| [(C₆F₅)₂ B F₂]⁻ | [C₆F₅ B F₃]⁻ | [B (C₆H₃F₂)₄]⁻ |

3. Compositions selon la revendication 1 ou 2 caractérisées en ce que l'entité cationique onium est :
| | |
|---|---|
| [(Φ)₂ I]⁺ | [C₈H₁₇-O-Φ- I -Φ]⁺ |
| [C₁₂H₂₅-Φ- I -Φ]⁺ | [(C₈H₁₇-O-Φ)₂ I]⁺ |
| [(Φ)₃ S]⁺ | [(Φ)₂- S-Φ-O-C₈H₁₇]⁺ |
| [Φ-S-Φ- S -(Φ)₂]⁺ | [(C₁₂H₂₅-Φ)₂ I]⁺ |

4. Compositions selon l'une quelconque des revendications 1 à 3 caractérisées en ce que le borate d'onium est :
| | |
|---|---|
| [(Φ)₂ I]⁺, [B (C₆F₅)₄]⁻ | |
| [C₁₂H₂₅-Φ- I -Φ]⁺, [B (C₆F₅)₄]⁻ | [(C₈H₁₇-O-Φ)₂ I]⁺, [B(C₆F₅)₄]⁻ |
| [(C₈H₁₇)-O-Φ- I -Φ)]⁺, [B (C₆F₅)₄]⁻ | [(Φ)₃ S]⁺, [B (C₆F₅)₄]⁻ |
| [(Φ)₂ S-Φ-O-C₈H₁₇]⁺, [B (C₆H₄CF₃)₄]⁻ | [(C₁₂H₂₅-Φ)₂I]⁺, [B(C₆F₅)₄]⁻ |

5. Compositions selon l'une quelconque des revendications 1 à 4 caractérisées en ce que ledit organopolysiloxane présentent des groupements fonctionnels par exemple de type epoxy, vinyléther.

6. Compositions selon la revendication 5 caractérisées en ce que lesdits polyorganosiloxanes sont linéaires ou sensiblement linéaires et constitués de motifs de formule (Il) et terminés par des motifs de formule (III) ou cycliques constitués de motifs de formule (II) 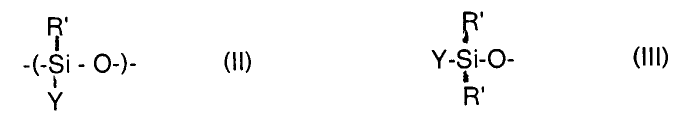 formules dans lesquelles
. les symboles R' sont semblables ou différents et représentent notamment un radical alkyle linéaire ou ramifié en C₁ - C₆, éventuellement substitué (3,3,3-trifluoropropyl par exemple), cycloalkyl en C₅ - C₈, aryle (phényle notamment), aryle substitué (dichlorophényle par exemple), au moins 60 % molaire des radicaux R' étant des radicaux méthyles ;
. les symboles Y sont semblables ou différents et représentent soit le groupement R' soit un radical organique fonctionnel réticulable par voie cationique tel que par exemple les groupements époxyfonctionnels, vinyloxyfonctionnels, lesdites fonctions par exemple époxyde, vinyléther étant reliées à un atome de la chaîne silicone par l'intermédiaire d'un radical divalent contenant de 2 à 20 atomes de carbone ;
l'un au moins des symboles Y représentant un radical organique fonctionnel réticulable par voie cationique, et de préférence de 1 à 10 radicaux organiques fonctionnels par mole de polymère.

7. Compositions selon la revendication 6 caractérisées en ce que ledit polyorganosiloxane présente une viscosité à 25°C de l'ordre de 10 à 10.000 mm²/s.

8. Procédé pour rendre des articles non adhérents à des surfaces auxquelles ils adhéreraient normalement, caractérisé en ce qu'on applique entre 0,1 et 5 g par m² de surface dudit l'article à enduire de composition faisant l'objet de l'une quelconque des revendications 1 à 7 et on réticule ladite composition par voie photochimique ou sous faisceau d'électrons.

9. Procédé selon la revendication 8 caractérisé en ce que l'opération de réticulation est réalisée par un rayonnement U.V. de longueur d'onde de l'ordre de 200 à 400 namomètres.

## Patentansprüche

1. Zusammensetzungen auf der Basis eines auf kationischem Wege vernetzbaren Polyorganosiloxans und einer wirksamen katalytischen menge eines Oniumborates eines Elementes der Gruppen 15 bis 17 des Periodensystems der Elemente (Chem. & Eng. News, Vol 63, Nr.5, 26 vom 4. Februar 1985), dadurch gekennzeichnet, daß die kationische Eigenschaft des genannten Oniumborates ausgewählt wird unter
1) den Oniumsalzen der Formel (I)
[(R₁)ₙ-A-(R₂)ₘ]⁺ (I)
in der
. A ein Element der Gruppen 15 bis 17 darstellt, wie I, S, Se, P, N,
. R₁ einen carbocyclischen oder heterocyclischen Rest Aryl mit 1 bis 20 Kohlenstoffatomen bedeutet, wobei der genannte heterocyclische Rest als Heteroelemente beispielsweise Stickstoff, Schwefel enthalten kann,
. R₂ bedeutet R₁ oder einen linearen oder verzweigten Rest Alkyl oder Alkenyl mit 1 bis 30 Kohlenstoffatomen, wobei die genannten Reste R₁ und R₂ gegebenenfalls substituiert sind durch beispielsweise eine Gruppe Alkoxy mit 1 bis 25 Kohlenstoffatomen, Alkyl mit 1 bis 25 Kohlenstoffatomen, Nitro, Chlor, Brom, Cyano, Carboxy, Mercapto,
. n eine ganze Zahl von 1 bis v + 1 ist, wobei v die Valenz des Elementes A darstellt,
. m eine ganze Zahl von 0 bis v-1 bedeutet, mit n + m = v + 1;
2) den Oxoisothiochromaniumsalzen der Formel 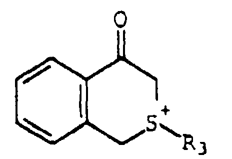 in der R₃ einen Rest Alkyl oder Cycloalkyl mit 1 bis 20 Kohlenstoffatomen oder einen Rest Aryl darstellt, insbesondere das Sulfoniumsalz von 2-Ethyl-4-oxoisothiochromanium oder 2-Dodecyl-4-oxoisothiochromanium, und dadurch, daß die anionische Gruppe Borat die Formel
[B Xₐ R_{b}]⁻
besitzt, in der
- a und b ganze Zahlen von 0 bis 4 sind, mit a + b = 4,
- die Symbole X darstellen:
. ein Halogenatom (Fluor, Chlor) mit a = 0 bis 3,
. eine Funktion OH mit a = 0 bis 2,
- die Symbole R gleich oder verschieden sind und bedeuten:
. einen Rest Phenyl, substituiert durch mindestens eine elektroattraktive Gruppe, wie beispielsweise CF₃, NO₂, CN oder durch mindestens zwei Halogenatome (ganz besonders Fluor),
. einen Rest Aryl, enthaltend mindestens zwei aromatische Kerne, wie beispielsweise Biphenyl, Naphthyl, gegebenenfalls substituiert durch mindestens ein Element oder eine elektroattraktive Gruppe, insbesondere ein Halogenatom (ganz besonders Fluor), CF₃, NO₂, CN.

2. Zusammensetzungen nach Anspruch 1, dadurch gekennzeichnet, daß die anionische Gruppe Borat ist:
| | | |
|---|---|---|
| [B(C₆F₅)₄]⁻ | [B(C₆H₄CF₃)₄]⁻ | |
| [(C₆F₅)₂BF₂]⁻ | [C₆F₅BF₃]⁻ | [B(C₆H₃F₂)₄]⁻ |

3. Zusammensetzungen nach Anspruch 1 oder 2, dadurch gekennzeichnet, daß die kationische Gruppe Onium ist:
| | |
|---|---|
| [(Φ)₂I]⁺ | [C₈H₁₇-O-Φ-I-Φ]⁺ |
| [C₁₂H₂₅-Φ-I-Φ-]⁺ | [(C₈H₁₇-O-Φ)₂I]⁺ |
| [(Φ)₃S]⁺ | [(Φ)₂-S-Φ-O-C₈H₁₇]⁺ |
| [Φ-S-Φ-S-(Φ)₂]⁺ | [C₁₂H₂₅-Φ)₂I]⁺ |

4. Zusammensetzungen nach irgendeinem der Ansprüche 1 bis 3, dadurch gekennzeichnet, daß das Oniumborat ist:
| | |
|---|---|
| [(Φ)₂I]⁺, [B(C₆F₅)₄]⁻ | |
| [C₁₂H₂₅-Φ-I-Φ]⁺, [B(C₆F₅)₄]⁻ ; | [(C₈H₁₇-O-Φ)₂I]⁺, [B(C₆F₅)₄]⁻ |
| [C₈H₁₇-O-Φ-I-Φ]⁺, [B(C₆F₅)₄]⁻ ; | [(Φ)₃S]⁺, [B(C₆F₅)₄]⁻ |
| [(Φ)₂-S-Φ-O-C₈H₁₇]⁺, [B(C₆H₄CF₃)₄]⁻ ; | [C₁₂H₂₅-Φ)₂I]⁺, [B(C₆F₅)₄]⁻ |

5. Zusammensetzungen nach irgendeinem den Ansprüche 1 bis 4, dadurch gekennzeichnet, daß das genannte Organopolysiloxan funktionelle Gruppen aufweist, beispielsweise vom Typ Epoxy, Vinylether.

6. Zusamnensetzungen nach Anspruch 5, dadurch gekennzeichnet, daß die genannten Polyorganosiloxane linear oder im wesentlichen linear sind, aus den Struktureinheiten der Formel (II) bestehen und durch Struktureinheiten der Formel (III) oder cyclischen Einheiten abgeschlossen werden, die aus Struktureinheiten der Formel (II) gebildet werden 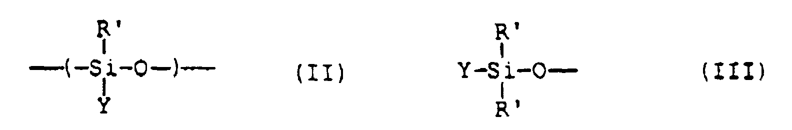 worin
. die Symbole R' gleich oder verschieden sind und insbesondere einen linearen oder verzweigten Rest Alkyl mit 1 bis 6 Kohlenstoffatomen, gegebenenfalls substituiert (beispielsweise 3,3,3-Trifluorpropyl), Cycloalkyl mit 5 bis 8 Kohlenstoffatomen, Aryl (insbesondere Phenyl) oder substituiertes Aryl (beispielsweise Dichlorphenyl) darstellen, wobei mindestens 60 Mol-% der Reste R' Reste Methyl sind;
. die Symbole Y gleich oder verschieden sind und entweder die Gruppe R' oder einen funktionellen organischen Rest darstellen, der auf kationischem Wege vernetzbar ist, wie beispielsweise die Epoxy-Funktionsgruppen und die Vinyloxy-Funktionsgruppen, wobei die genannten Funktionen, beispielsweise Epoxid, Vinylether, mit einem Atom der Siliconkette über das Zwischenstück eines divalenten Restes verbunden sind, der 2 bis 20 Kohlenstoffatome enthält;
und mindestens eines der Symbole Y einen funktionellen organischen Rest darstellt, der auf kationischem Wege vernetzbar ist, wobei vorzugsweise 1 bis 10 funktionelle organische Reste pro Mol Polymer vorliegen.

7. Zusammensetzungen nach Anspruch 6, dadurch gekennzeichnet, daß das genannte Polyorganosiloxan eine Viskosität bei 25 °C in der Größenordnung von 10 bis 10.000 mm²/s aufweist.

8. Verfahren zur Antihaft-Ausrüstung von Gegenständen für Oberflächen, an denen sie normalerweise haften, dadurch gekennzeichnet, daß man zwischen 0,1 und 5 g der Zusammensetzung nach irgendeinem der Ansprüche 1 bis 7 pro m² Fläche des genannten Gegenstandes aufträgt und die genannte Zusammensetzung dann auf photochemischem Wege oder mittels Elektronenstrahlung vernetzt.

9. Verfahren nach Anspruch 8, dadurch gekennzeichnet, daß der Arbeitsgang der Vernetzung mit Hilfe einer UV-Strahlung der Wellenlänge in der Größenordnung von 200 bis 400 Nanometer durchgeführt wird.

## Claims

1. Compositions based on a cationically crosslinkable polyorganosiloxane and on an effective catalytic quantity of an onium borate of an element from groups 15 to 17 of the periodic classification (Chem. & Eng. News, Vol. 63, No. 5, 26; 4 February 1985), which compositions are characterized in that the cationic entity of the said onium borate is chosen from:
1) - the onium salts of formula I
[(R¹)ₙ-A-(R²)ₘ]⁺ (I)
in which formula:
. A represents an element from groups 15 to 17, such as I, S, Se, P or N, for example,
. R¹ represents a C₆-C₂₀ heterocyclic or carbocyclic aryl radical, it being possible for the said heterocyclic radical to contain, as heteroelements, nitrogen or sulphur, for example,
. R² represents R¹ or a linear or branched, C₁-C₃₀ alkenyl or alkyl radical, the said radicals R¹ and R² optionally being substituted by a C₁-C₂₅ alkoxy, C₁-C₂₅ alkyl, nitro, chloro, bromo, cyano, carboxyl or mercapto group, for example,
. n is an integer ranging from 1 to v+1, v being the valency of the element A
. m is an integer ranging from 0 to v-1 with n+m = v+1
2) - the oxoisothiochromanium salts having the formula: 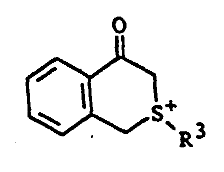 in which R³ represents a C₁-C₂₀ alkyl or cycloalkyl radical or an aryl radical, especially the 2-ethyl-4-oxoisothiochromanium or 2-dodecyl-4-oxoisothiochromanium sulphonium salt, and in that the anionic borate entity has the formula:
[BXₐR_{b}]⁻
in which formula:
- a and b are integers ranging from 0 to 4 with a + b = 4
- the symbols X represent
. a halogen atom (chlorine or fluorine) with a = 0 to 3
. an OH functional group with a = 0 to 2
- the symbols R are identical or different and represent
. a phenyl radical substituted by at least one electron-withdrawing group, such as CF₃, NO₂ or CN, for example, or by at least 2 halogen atoms (most particularly fluorine),
. an aryl radical containing at least two aromatic rings, such as biphenyl or naphthyl, for example, and optionally substituted by at least one electron-withdrawing element or group, especially a halogen atom (most particularly fluorine), CF₃, NO₂ or CN.

2. Compositions according to claim 1, characterized in that the anionic borate entity is
| | | |
|---|---|---|
| [B(C₆F₅)₄]⁻ | [B(C₆H₄CF₃)₄]⁻ | |
| [(C₆F₅)₂BF₂] ⁻ | [C₆F₅BF₃]⁻ | [B(C₆H₃F₂)₄]⁻ |

3. Compositions according to claim 1 or 2, characterized in that the cationic onium entity is:
| | |
|---|---|
| [(Φ)₂I]⁺ | [C₈H₁₇-O-Φ-I-Φ]⁺ |
| [C₁₂H₂₅-Φ-I-Φ]⁺ | [(C₈H₁₇-O-Φ)₂I]⁺ |
| [(Φ)₃S]⁺ | [(Φ)₂-S-Φ-O-C₈H₁₇]⁺ |
| [Φ-S-Φ-S-(Φ)₂]⁺ | [(C₁₂H₂₅-Φ)₂I]⁺ |

4. Compositions according to any one of claims 1 to 3, characterized in that the onium borate is:

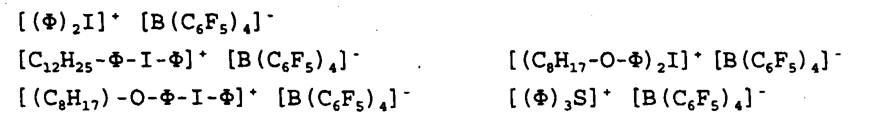

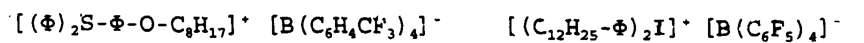

5. Compositions according to any one of claims 1 to 4, characterized in that the said organopolysiloxane has functional groups of epoxy or vinyl ether type, for example.

6. Compositions according to claim 5, characterized in that the said polyorganosiloxanes are linear or substantially linear and consist of units of formula (II) and end in units of formula (III) or cyclic consisting of units of formula (II) 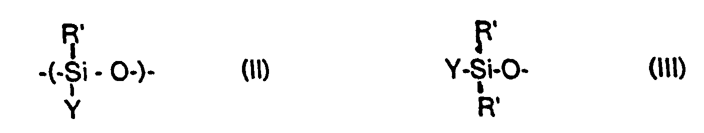 in which formulae
. the symbols R' are similar or different and especially represent a C₁-C₆ linear or branched alkyl radical, which is optionally substituted (3,3,3-trifluoropropyl, for example), a C₅-C₈ cycloalkyl radical, an aryl (especially phenyl) radical or a substituted aryl (dichlorophenyl, for example) radical, at least 60 molar % of the radicals R' being methyl radicals;
. the symbols Y are similar or different and represent either the group R' or a cationically crosslinkable functional organic radical, such as the epoxy functional or vinyloxy functional groups, for example, the said epoxide or vinyl ether, for example, functional groups being joined to an atom of the silicone chain via a divalent radical containing from 2 to 20 carbon atoms;
at least one of the symbols Y representing a cationically crosslinkable functional organic radical, and preferably from 1 to 10 functional organic radicals per mole of polymer.

7. Compositions according to claim 6, characterized in that the said polyorganosiloxane exhibits a viscosity at 25°C of the order of 10 to 10,000 mm²/s.

8. Process for making articles nonadherent to surfaces to which they would normally adhere, characterized in that there is applied between 0.1 and 5 g per m² of surface of the said article to be coated of composition forming the subject of any one of claims 1 to 7 and the said composition is crosslinked photochemically or by an electron beam.

9. Process according to claim 8, characterized in that the crosslinking operation is carried out by U.V. radiation with a wavelength of the order of 200 to 400 nanometres.
